# EUROPÄISCHE PATENTSCHRIFT

(11) **EP 3 833 538 B1**
(45) Veröffentlichungstag und Bekanntmachung des Hinweises auf die Patenterteilung: **03.04.2024**
(21) Anmeldenummer: 19739961.1
(22) Anmeldetag: 09.07.2019
(51) Int. Cl.: B29C 70/72, B29C 70/88, B60G 17/019, B60G 7/00, B29L 31/30

(54) **FAHRWERKBAUTEIL, VERFAHREN ZUR HERSTELLUNG EINES FAHRWERKBAUTEILS SOWIE RADAUFHÄNGUNG FÜR EIN KRAFTFAHRZEUG**
CHASSIS COMPONENT, METHOD FOR PRODUCING A CHASSIS COMPONENT, AND WHEEL SUSPENSION FOR A MOTOR VEHICLE
COMPOSANT DE MÉCANISME DE ROULEMENT, PROCÉDÉ DE FABRICATION D'UN COMPOSANT DE MÉCANISME DE ROULEMENT AINSI QUE SUSPENSION DE ROUE POUR UN VÉHICULE À MOTEUR

(30) Priorität: 10.08.2018 DE 102018213513
(43) Veröffentlichungstag der Anmeldung: 16.06.2021
(73) Patentinhaber: ZF Friedrichshafen AG, 88046 Friedrichshafen (DE)
(72) Erfinder: MEIER ZU FARWIG, Jonas, 49191 Belm (DE); LUNDBERG, Alexander, 49324 Melle (DE); KLANK, Michael, 49084 Osnabrück (DE)
(74) Vertreter: ZF Friedrichshafen AG
(86) Internationale Anmeldenummer: PCT/EP2019/068407
(87) Internationale Veröffentlichungsnummer: WO 2020/030366

(56) Entgegenhaltungen:
- WO-A1-03/039894
- DE-A1-102011 010 367
- JP-A- 2018 089 621

## Beschreibung

Die Erfindung betrifft ein Fahrwerkbauteil für eine Radaufhängung, mit zumindest zwei Gelenkpunkten, zumindest einer Verbindungsstruktur, welche die Gelenkpunkte miteinander verbindet, sowie zumindest einem Sensor, wobei der zumindest eine Sensor auf einem Abschnitt einer Oberfläche der Verbindungsstruktur angeordnet ist, und der Sensor Kontaktstellen von zumindest zwei in die Verbindungsstruktur integrierten Leitungsabschnitten miteinander verbindet.

Des Weiteren betrifft die Erfindung ein Verfahren zur Herstellung eines Fahrwerkbauteils, wobei das Fahrwerkbauteil mit zumindest zwei Gelenkpunkten und einer Verbindungsstruktur aus wenigstens einem Faserverbundwerkstoff hergestellt wird, und das Fahrwerkbauteil mit zumindest einem Sensor versehen wird, wobei im Herstellungsprozess der Verbindungsstruktur zumindest zwei Leitungsabschnitte in die Verbindungsstruktur integriert werden, und Kontaktstellen der Leitungsabschnitte in eine Oberfläche der Verbindungsstruktur einmünden und durch einen Sensor miteinander verbunden werden. Schließlich hat die Erfindung noch eine Radaufhängung für ein Kraftfahrzeug mit mindestens einem vorgenannten Fahrwerkbauteil zum Gegenstand.

Ein derartiges Fahrwerkbauteil und ein solches Verfahren sind aus der DE 10 2011 010367 A1 bekannt. Aus der JP 2008 089621 A ist ein Sensor mit einer piezoresistiven Schicht bekannt.

Aus der WO 03/039894 A1 geht ein Fahrwerkbauteil hervor, bei welchem es sich insbesondere um einen Lenker für eine Radaufhängung handelt. Der Lenker besteht aus faserverstärkten Kunststoffen oder Kunststoffverbundsystemen, wobei in die Kunststoffanteile des Lenkers ein als Dehnungsmessstreifen oder ein Piezoelement ausgebildeter Sensor zur Messung von an dem Fahrwerkbauteil angreifenden Kräften integriert ist.

Aus der DE 10 2014 214 827 A1 geht ein Fahrwerkbauteil für eine Radaufhängung hervor, welches zwei Gelenkpunkten aufweist, die durch eine Verbindungsstruktur miteinander verbunden sind. Das Fahrwerkbauteil ist aus einer Faser-Kunststoff-Verbundstruktur hergestellt, in welche ein Sensor integriert ist, der eine Veränderung der Faser-Verbundstruktur detektiert. Hierzu ist der in die Faser-Kunststoff-Verbundstruktur integrierte Sensor mit einer Auswertevorrichtung verbindbar.

Die gemäß dem Stand der Technik vorgesehene Integration des Sensors in das Fahrwerkbauteil erfordert es, dass der Sensor zur Anbindung an die Auswertevorrichtung mit Zuleitungen versehen wird, welche auf verschiedene Art und Weise an der Oberfläche des Fahrwerkbauteils anbringbar sind. So sind die Zuleitungen mittels einer Lötverbindung mit dem Sensor verbindbar. Weitere Verbindungsmöglichkeiten stellen das Aufbringen von Leitlack wie Silberlack oder das Aufkleben von flexiblen Leiterbahnfolien dar. Neben den notwendigen, zeitaufwendigen Vorbereitungsmaßnahmen, um die Voraussetzungen für das Löten, Auftragen oder Kleben zu schaffen, ist insbesondere bei einer Verwendung von Leitlack eine Dauerfestigkeit der nicht gegeben.

Ausgehend vom vorstehend beschriebenen Stand der Technik ist es nun die Aufgabe der vorliegenden Erfindung, ein Fahrwerkbauteil zu schaffen, welches sich durch eine einfachere Ausgestaltung auszeichnet und einfacher und kostengünstiger herstellbar ist.

Diese Aufgabe wird aus vorrichtungstechnischer Sicht ausgehend vom Oberbegriff des Anspruchs 1 in Verbindung mit dessen kennzeichnenden Merkmalen gelöst. Aus verfahrenstechnischer Sicht erfolgt eine Lösung der Aufgabe ausgehend vom Oberbegriff des nebengeordneten Anspruchs 11 in Verbindung mit dessen kennzeichnenden Merkmalen. Die hierauf jeweils folgenden, abhängigen Ansprüche geben jeweils vorteilhafte Weiterbildungen der Erfindung wieder. Eine Radaufhängung, bei welcher zumindest ein erfindungsgemäßer Lenker zur Anwendung kommt, ist ferner Gegenstand von Anspruch 10.

Gemäß der Erfindung wird ein Fahrwerkbauteil für eine Radaufhängung vorgeschlagen, welches zumindest zwei Gelenkpunkten, zumindest einer Verbindungsstruktur, welche die Gelenkpunkte miteinander verbindet, sowie zumindest einen Sensor aufweist. An dem jeweiligen Gelenkpunkt können ein Kugelgelenk und/oder ein Gummilager vorgesehen sein. Der Sensor dient dazu, eine Veränderung der Faserverbundstruktur des Fahrwerkbauteils zu erkennen und/oder Belastungen bzw. Überlastungen oder auch Überbeanspruchungen zu erfassen. Durch eine kontinuierliche Überwachung der auftretenden Kräfte in dem Fahrwerkbauteil lassen sich Ermüdungserscheinungen frühzeitig erkennen.

Die Erfindung umfasst nun die technische Lehre, dass der zumindest eine Sensor auf einem Abschnitt einer Oberfläche der Verbindungsstruktur angeordnet ist, wobei der Sensor Kontaktstellen von zumindest zwei in die Verbindungsstruktur integrierten Leitungsabschnitten miteinander verbindet. Eine derartige Ausgestaltung hat dabei den Vorteil, dass auf eine aufwendige, zeitintensive Vorbereitung der Oberfläche der Verbindungsstruktur verzichtet werden kann, um eine elektrisch leitende Verbindung zwischen dem Sensor und den Leitungsabschnitten zu realisieren. Die Leitungsabschnitte sind durch die Integration in die Verbindungstruktur des Fahrwerkbauteils vor äußeren Einflüssen geschützt und dauerfest angeordnet. Die leitende Verbindung der Kontaktstellen wird durch den Sensor erreicht, welcher auf der Oberfläche des Fahrwerkbauteils angeordnet ist, an welcher die im Fahrwerkbauteil auftretenden Spannungen aufgrund von Dehnung, Stauchung sowie Torsion am größten sind.

Dabei kann die zumindest eine Verbindungsstruktur aus einem Faserverbundwerkstoff bestehen. Bevorzugt ist die zumindest eine Verbindungsstruktur aus einem duroplastischen Kurzfaser-Kunststoff-Verbund, bevorzugt aus einem glasfaserverstärkten Kunststoff (GFK), gefertigt. Alternativ kann die Verbindungsstruktur aus einem Kunststoff gebildet sein, der nicht elektrisch leitfähig ist.

Vorzugsweise ist der zumindest eine Sensor als eine auf dem Abschnitt der Oberfläche der Verbindungsstruktur angeordnete piezoresistive Dünnschicht ausgeführt. Zum Schutz vor äußeren Einflüssen kann die piezoresistive Dünnschicht mit einer Schutzschicht versehen sein. Insbesondere kann die Schutzschicht die piezoresistive Dünnschicht wasserdicht umschließen. Zudem ist es vorteilhaft, wenn das Material, aus welchem die Schutzschicht besteht, elastisch ist, so dass Verformungen des Fahrwerkbauteils nicht zum Ablösen von der Oberfläche führen. Darüber hinaus kann die Schutzschicht einen Einschlag-und Splitterschutz ausbilden. Die piezoresistive Dünnschicht kann von dem Material der Verbindungsstruktur bedeckt oder von diesem Material umhüllt sein. Insbesondere ist die Schutzschicht aus dem Material der Verbindungsstruktur gebildet.

Erfindungsgemäß weist die Verbindungsstruktur im Bereich des Sensors, insbesondere des als piezoresistiver Dünnschicht ausgebildeten Sensors, wenigstens einen Anschluss auf, an dem Anschlussstellen der Leitungsabschnitte von außen zugänglich sind. Dies ermöglicht es auf einfache Weise, eine Zuleitung anzuschließen, um die von dem Sensor bzw. dem als piezoresistive Dünnschicht ausgeführten Sensor erfassten Signale an eine Auswertevorrichtung zu übertragen. Hierzu kann der Anschluss als eine Kupplung ausgebildet sein, mit welcher ein Stecker der Zuleitung formschlüssig verbindbar ist.

Gemäß einer bevorzugten Ausführung kann die piezoresistive Dünnschicht als eine Lackschicht aus einem piezoresistiven Material ausgeführt sein. Das Aufbringen der Lackschicht kann während des Fertigungsvorganges nach dem Eingießen der Leitungsabschnitte oder nach Abschluss des Fertigungsvorganges des Fahrwerkbauteils erfolgen. Dabei ist es besonders vorteilhaft, dass die Lackschicht durch Gießen oder Sprühen auf die Oberfläche der Verbindungsstruktur aufbringbar ist. Alternativ kann die Lackschicht mittels Rakeln, Drucken oder Sputtern aufgebracht werden. Insbesondere kann die als Lackschicht ausgeführte piezoresistive Dünnschicht aus einem Polymerlack bestehen.

Zur Erfassung der Beanspruchung des Fahrwerkbauteils kann sich der Sensor, insbesondere die piezoresistive Dünnschicht, in Längsrichtung und/oder Hauptspannungsrichtung der zumindest einen Verbindungsstruktur erstrecken. Insbesondere bei einem Fahrwerkbauteil mit mehr als zwei Anbindungspunkten können mehrere relevante Spannungsrichtungen zu berücksichtigen sein, in die sich die piezoresistive Dünnschicht erstrecken kann. Denkbar ist auch die Anordnung eines weiteren als piezoresistive Dünnschicht ausgeführten Sensors, der unter einem Winkel zur Längsachse des Fahrwerkbauteils angeordnet sein kann.

Gemäß einer vorteilhaften Weiterbildung können die Leitungsabschnitte als Stanzgitter oder Drähte ausgebildet sein. Dies ermöglicht eine kostengünstige Herstellung der Leitungsabschnitte.

Bevorzugt kann das Fahrtwerkbauteil als ein Lenker ausgebildet sein. Dabei kann es sich um einen 2-Punkt-Lenker, der zwei Gelenkpunkte miteinander verbindet oder einen 3-Punkt- oder Mehr-Punkt-Lenker handeln. Alternativ kann das Fahrwerkbauteil als eine Pendelstütze, ein Radträger oder eine Blattfeder ausgebildet sein. Vorzugsweise ist das Fahrwerkbauteil als ein Traggelenk oder ein Stützlager, insbesondere für einen Dämpfer, ausgebildet.

Des Weiteren wird ein Verfahren zur Herstellung eines Fahrwerkbauteils gemäß dem unabhängigen Anspruch 11 zur Lösung der eingangs gestellten Aufgabe vorgeschlagen.

Gemäß dem unabhängigen Anspruch 11 wird ein Verfahren zur Herstellung eines Fahrwerkbauteils vorgeschlagen, wobei das Fahrwerkbauteil mit zumindest zwei Gelenkpunkten und zumindest einer Verbindungsstruktur aus einem Kunststoff oder wenigstens einem Faserverbundwerkstoff hergestellt wird. Insbesondere ist der Kunststoff oder der Faserverbundwerkstoff elektrisch nicht leitend. Das Fahrwerkbauteil wird mit zumindest einem Sensor versehen, mit welchem eine Veränderung der Faserverbundstruktur des Fahrwerkbauteils erkannt und/oder Belastungen bzw. Überlastungen oder auch Überbeanspruchungen erfasst werden. Hierzu werden im Herstellungsprozess der Verbindungsstruktur zumindest zwei Leitungsabschnitte in die Verbindungsstruktur integriert, wobei Kontaktstellen der Leitungsabschnitte in eine Oberfläche der Verbindungsstruktur münden und durch einen Sensor miteinander verbunden. Insbesondere wird der Sensor auf der Oberfläche der Verbindungsstruktur angeordnet.

Vorzugsweise sind die Leitungsabschnitte als Stanzgitter oder Drähte ausgebildet. Die Leitungsabschnitte können vor der Herstellung der Verbindungsstruktur in ein Werkzeug zum Herstellen der Verbindungsstruktur eingelegt und/oder in dem Werkzeug positioniert werden. Mittels eines Guss- und/oder Spritzgussprozesses kann die Verbindungsstruktur hergestellt und die Leitungsabschnitte in dieser integriert werden.

Insbesondere ist der Sensor als piezoresistive Dünnschicht ausgeführt. Dabei kann die als Sensor ausgeführte piezoresistive Dünnschicht auf einen Abschnitt der Verbindungsstruktur aufgegossen oder aufgesprüht werden. Durch das Aufgießen oder Aufsprühen wird der Vorgang gegenüber dem Stand der Technik vereinfacht.

Erfindungsgemäß wird an der Oberfläche der Verbindungsstruktur wenigstens ein Anschluss angeformt. Dabei ist der Anschluss benachbart zu dem Sensor angeordnet. Die Anzahl der Anschlüsse entspricht dabei der Anzahl an Sensoren, die auf die Verbindungsstruktur auf einen Abschnitt der Verbindungsstruktur aufgegossen werden.

Besonders bevorzugt umfasst eine Radaufhängung einen oder mehrere erfindungsgemäß gestaltete Fahrwerkbauteile, die insbesondere als Lenker für die Radaufhängung konzipiert sein können.

Eine vorteilhafte Ausführungsform der Erfindung, die nachfolgend erläutert wird, ist in den Zeichnungen dargestellt. Es zeigt:
- Fig. 1: eine perspektivische Ansicht eines als Lenker ausgebildeten Fahrwerkbauteils; und
- Fig. 2: eine Teilansicht des Fahrwerkbauteils in Explosionsdarstellung.

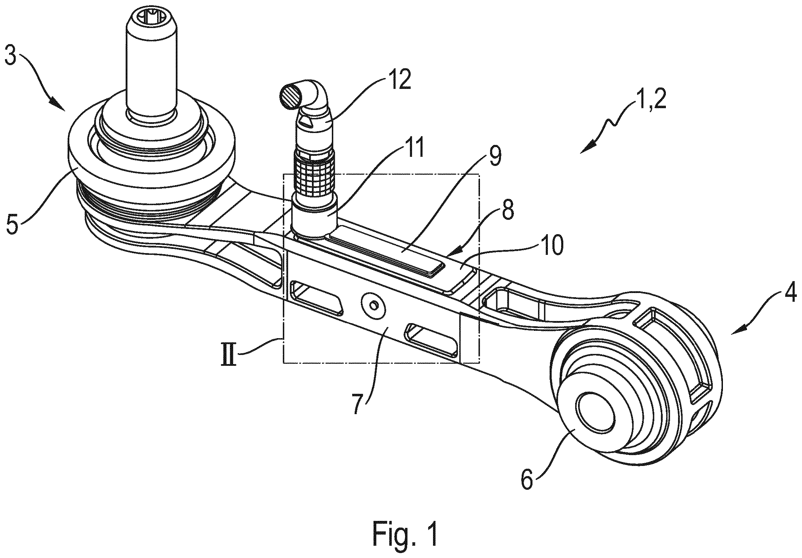

In Fig. 1 ist eine perspektivische Ansicht eines als Lenker 2 ausgebildeten Fahrwerkbauteils 1 dargestellt. Dabei ist zu erkennen, dass der Lenker 2 vorliegend als 2-Punkt-Lenker mit zwei Gelenkpunkten 3 und 4 gestaltet ist, wobei an dem Gelenkpunkt 3 ein Gelenk in Form eines Kugelgelenks 5 und an dem Gelenkpunkt 4 ein Gelenk in Form eines Gummilagers 6 vorgesehen ist.

Der Lenker 2 besteht aus einem Faser-Kunststoff-Verbund und umfasst dabei zumindest eine Verbindungsstruktur 7, die zwischen den Gelenkpunkten 3 und 4 verläuft und sich aus einem duroplastischen Endlosfaser-Kunststoff-Verbund, insbesondere GFK, zusammensetzt.

An einer Oberfläche 8 der Verbindungsstruktur 7 ist ein Sensor 9 angeordnet, von welchem lediglich eine Schutzschicht 10 dargestellt ist. Der Sensor 9 dient dazu, eine Veränderung der Faserverbundstruktur des Fahrwerkbauteils 1 zu erkennen und/oder Belastungen bzw. Überlastungen oder auch Überbeanspruchungen zu erfassen.

Weiterhin ist auf der Oberfläche 8 ein im Wesentlichen hohlzylindrischer Anschluss 11 angeordnet. Der Anschluss 11 ist vorzugsweise benachbart zu dem Sensor 9 angeordnet. Hierbei kann der Anschluss 11 als eine Art Kupplung ausgebildet sein, mit welcher ein Stecker 12 einer Zuleitung formschlüssig verbindbar ist. Mittels der Zuleitung können Signale des Sensors 9 an eine Auswertevorrichtung zur Auswertung übertragen werden.

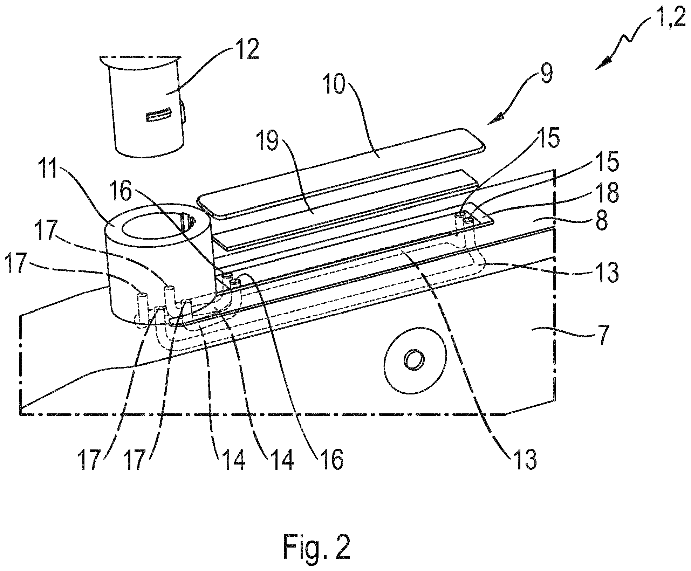

Die Darstellung in Fig. 2 zeigt eine Teilansicht des Fahrwerkbauteils 1 in einer Explosionsdarstellung. Der Lenker 2 ist teilweise transparent dargestellt, um in diesen integrierte Bauteile sichtbar darzustellen. Bei den in die Verbindungsstruktur 7 integrierten handelt es sich um jeweils paarweise angeordnete Leitungsabschnitte 13 und 14, die sich abschnittsweise in Längsrichtung der Verbindungsstruktur 7 unterhalb der Oberfläche 8 erstrecken. Jeder Leitungsabschnitt 13, 14 weist an einem Ende eine Kontaktstelle15 bzw. 16 auf. Die Kontaktstellen 15 und 16 münden beabstandet zueinander und an einander gegenüberliegenden Stellen der Verbindungsstruktur 7 in die Oberfläche 8 ein.

Bei der Herstellung der als Kunststoffformteil ausgeführten Verbindungsstruktur 7, beispielsweise im Resin Transfer Moulding-Verfahren, werden das Kugelgelenk 5, das Gummilager 6 sowie die Leitungsabschnitte 13, 14 in einem Werkzeug positioniert, um diese darin zu integrieren.

In dem dargestellten Ausführungsbeispiel ist eine im Wesentlichen quaderförmige Senke 18 vorgesehen, in deren einem Endbereich die Kontaktstellen 15 der Leitungsabschnitte 13 und in deren gegenüberliegendem Endbereich die Kontaktstellen 16 der Leitungsabschnitte 14 in die Oberfläche 8 einmünden. Die Kontaktstellen 15, 16 schließen im Wesentlichen bündig mit der Oberfläche 8 im Inneren der Senke 18 ab. Am anderen Ende der Leitungsabschnitte 13, 14 befindet sich jeweils eine Anschlussstelle17, welche in den Anschluss 11 mündet. Die Anschlussstellen können über die Oberfläche 8 hinaus in den Anschluss 11 hineinragen. Die Leitungsabschnitt 13, 14 können bevorzugt als Stanzgitter oder Drähte ausgeführt sein. Bei der Herstellung des Lenkers 2 werden die Leitungsabschnitt 13, 14 in die Verbindungsstruktur 7 integriert, indem diese nahezu vollständig umspritzt werden. Lediglich die Kontaktstellen 15, 16 sowie die Anschlussstellen 17 liegen frei.

Der Sensor 9 ist als eine piezoresistive Dünnschicht 19 ausgeführt, welche die jeweils einander gegenüberliegend angeordneten Kontaktstellen 15 und16 der Leitungsabschnitt 13, 14 miteinander leitend verbindet.

Die piezoresistive Dünnschicht 19 lässt sich beispielsweise durch Gießen oder Sprühen auf die Oberfläche 8 respektive in der Senke 18 aufbringen. Die Schutzschicht 10 wird anschließend auf die Dünnschicht 19 aufgebracht, um diese vor äußeren Einflüssen zu schützen. Die Tiefe der Senke 18 kann derart gewählt werden, dass zumindest die piezoresistive Dünnschicht 19 nahezu bündig oder bündig mit der die Senke 18 umgebenden Oberfläche 8 abschließt. Die auf die piezoresistive Dünnschicht 19 aufgebrachte Schutzschicht 10 dient dazu, die piezoresistive Dünnschicht 19 wasserdicht umschließen. Zudem ist es vorteilhaft, wenn das Material, aus welchem die Schutzschicht 10 besteht, elastisch ist, so dass Verformungen des Fahrwerkbauteils 1 an der Oberfläche 8 nicht zum Ablösen führen. Darüber hinaus kann die Schutzschicht 10 einen Einschlag-und Splitterschutz ausbilden.

Auch das Aufbringen der piezoresistiven Dünnschicht 19 kann, wie die Integration der Leitungsabschnitt 13, 14, in den Fertigungsprozess der Verbindungsstruktur 7 integriert werden.

### Bezugszeichen

- 1: Fahrwerkbauteil
- 2: Lenker
- 3: Gelenkpunkt
- 4: Gelenkpunkt
- 5: Kugelgelenk
- 6: Gummilager
- 7: Verbindungsstruktur
- 7: Innenbereich
- 8: Oberfläche
- 9: Sensor
- 10: Schutzschicht
- 11: Anschluss
- 12: Stecker
- 13: Leitungsabschnitt
- 14: Leitungsabschnitt
- 15: Kontaktstelle
- 16: Kontaktstelle
- 17: Anschlussstelle
- 18: Senke
- 19: Piezoresistive Dünnschicht

## Patentansprüche

1. Fahrwerkbauteil (1) für eine Radaufhängung, mit zumindest zwei Gelenkpunkten (3, 4), zumindest einer Verbindungsstruktur (7), welche die Gelenkpunkte (3, 4) miteinander verbindet, sowie zumindest einem Sensor (9), wobei der zumindest eine Sensor (9) auf einem Abschnitt einer Oberfläche (8) der Verbindungsstruktur (7) angeordnet ist, und der Sensor (9) Kontaktstellen (15, 16) von zumindest zwei in die Verbindungsstruktur (7) integrierten Leitungsabschnitten (13, 14) miteinander verbindet, **dadurch gekennzeichnet, dass** die Verbindungsstruktur (7) im Bereich des Sensors (9) wenigstens einen Anschluss (11) aufweist, an dem Anschlussstellen (17) der Leitungsabschnitte (13, 14) von außen zugänglich sind.

2. Fahrwerkbauteil (1) nach Anspruch 1, **dadurch gekennzeichnet, dass** die zumindest eine Verbindungsstruktur (7) aus einem Faserverbundwerkstoff, insbesondere einem glasfaserverstärkten Kunststoff, besteht.

3. Fahrwerkbauteil (1) nach Anspruch 1 oder 2, **dadurch gekennzeichnet, dass** der zumindest eine Sensor (9) als eine auf dem Abschnitt der Oberfläche (8) der Verbindungsstruktur (7) angeordnete piezoresistive Dünnschicht (19) ausgeführt ist, insbesondere ist die piezoresistive Dünnschicht (19) mit einer Schutzschicht (10) versehen oder mit dem Material der Verbindungsstruktur (7) bedeckt oder von diesem Material umhüllt.

4. Fahrwerkbauteil (1) nach einem der Ansprüche 1 bis 3, **dadurch gekennzeichnet, dass** die piezoresistive Dünnschicht (19) als eine Lackschicht aus einem piezoresistiven Material ausgeführt ist.

5. Fahrwerkbauteil (1) nach Anspruch 4, **dadurch gekennzeichnet, dass** die Lackschicht durch Gießen oder Sprühen aufgebracht ist.

6. Fahrwerkbauteil (1) nach Anspruch 4 oder 5, **dadurch gekennzeichnet, dass** die Lackschicht aus einem Polymerlack besteht.

7. Fahrwerkbauteil (1) nach einem der Ansprüche 1 bis 6, **dadurch gekennzeichnet, dass** sich der Sensor (9), insbesondere eine piezoresistive Dünnschicht (19), in Längsrichtung und/oder Hauptspannungsrichtung des Fahrwerkbauteils (1) erstreckt.

8. Fahrwerkbauteil (1) nach einem der Ansprüche 1 bis 7, **dadurch gekennzeichnet, dass** die Leitungsabschnitte (13, 14) als Stanzgitter oder Drähte ausgebildet sind.

9. Fahrwerkbauteil (1) nach einem der Ansprüche 1 bis 8, **dadurch gekennzeichnet, dass** das Fahrwerkbauteil (1) als ein Lenker (2), eine Pendelstütze, ein Radträger oder eine Blattfeder ausgebildet ist.

10. Radaufhängung für ein Kraftfahrzeug, umfassend zumindest ein Fahrtwerkbauteil (1) nach einem oder mehreren der Ansprüche 1 bis 9.

11. Verfahren zur Herstellung eines Fahrwerkbauteils (1), wobei das Fahrwerkbauteil (1) mit zumindest zwei Gelenkpunkten (3, 4) und einer Verbindungsstruktur (7) aus einem Kunststoff oder wenigstens einem Faserverbundwerkstoff hergestellt wird, und wobei das Fahrwerkbauteil (1) mit zumindest einem Sensor (9) versehen wird, wobei im Herstellungsprozess der Verbindungsstruktur (7) zumindest zwei Leitungsabschnitte (13, 14) in die Verbindungsstruktur (7) integriert werden, und Kontaktstellen (15, 16) der Leitungsabschnitte (13, 14) in eine Oberfläche (8) der Verbindungsstruktur (7) einmünden und durch einen Sensor (9) miteinander verbunden werden, **dadurch gekennzeichnet, dass** an der Oberfläche (8) der Verbindungsstruktur (7) ein Anschluss (11) angeformt wird, wobei an dem Anschluss (11) Anschlussstellen (17) der Leitungsabschnitte (13, 14) von außen zugänglich sind.

12. Verfahren nach Anspruch 11, **dadurch gekennzeichnet, dass** der Sensor (9) als eine piezoresistive Dünnschicht (19) ausgeführt wird, insbesondere wird die piezoresistive Dünnschicht (19) auf einen Abschnitt der Verbindungsstruktur (7) aufgegossen oder aufgesprüht.

## Claims

1. Chassis component (1) for a wheel suspension, having at least two pivot points (3, 4), at least one connecting structure (7) which connects the pivot points (3, 4) to each other, and also at least one sensor (9), wherein the at least one sensor (9) is arranged on a section of a surface (8) of the connecting structure (7), and the sensor (9) connects contact points (15, 16) of at least two line sections (13, 14) integrated into the connecting structure (7) to each other, **characterized in that** the connecting structure (7) has at least one connection (11) in the region of the sensor (9), connection points (17) of the line sections (13, 14) being accessible from outside at the at least one connection.

2. Chassis component (1) according to Claim 1, **characterized in that** the at least one connecting structure (7) consists of a fibre composite material, in particular a glass-fibre-reinforced plastic.

3. Chassis component (1) according to Claim 1 or 2, **characterized in that** the at least one sensor (9) is embodied as a piezoresistive thin film (19) arranged on the section of the surface (8) of the connecting structure (7), in particular the piezoresistive thin film (19) is provided with a protective layer (10) or covered by the material of the connecting structure (7) or sheathed by this material.

4. Chassis component (1) according to any of Claims 1 to 3, **characterized in that** the piezoresistive thin film (19) is embodied as a coating layer composed of a piezoresistive material.

5. Chassis component (1) according to Claim 4, **characterized in that** the coating layer is applied by pouring or spraying.

6. Chassis component (1) according to Claim 4 or 5, **characterized in that** the coating layer consists of a polymer coating.

7. Chassis component (1) according to any of Claims 1 to 6, **characterized in that** the sensor (9), in particular a piezoresistive thin film (19), extends in the longitudinal direction and/or main direction of stress of the chassis component (1).

8. Chassis component (1) according to any of Claims 1 to 7, **characterized in that** the line sections (13, 14) are designed as leadframes or wires.

9. Chassis component (1) according to any of Claims 1 to 8, **characterized in that** the chassis component (1) is designed as a link (2), a hinged support, a wheel support or a leaf spring.

10. Wheel suspension for a motor vehicle, comprising at least one chassis component (1) according to one or more of Claims 1 to 9.

11. Method for producing a chassis component (1), wherein the chassis component (1) having at least two pivot points (3, 4) and one connecting structure (7) is produced from a plastic or at least one fibre composite material, and wherein the chassis component (1) is provided with at least one sensor (9), wherein at least two line sections (13, 14) are integrated into the connecting structure (7) during the production process for the connecting structure (7), and contact points (15, 16) of the line sections (13, 14) open into a surface (8) of the connecting structure (7) and are connected to each other by a sensor (9), **characterized in that** a connection (11) is integrally formed on the surface (8) of the connecting structure (7), wherein connection points (17) of the line sections (13, 14) are accessible from outside at the connection (11).

12. Method according to Claim 11, **characterized in that** the sensor (9) is embodied as a piezoresistive thin film (19), in particular the piezoresistive thin film (19) is poured or sprayed onto a section of the connecting structure (7).

## Revendications

1. Composant de châssis (1) pour une suspension de roue, avec au moins deux points d'articulation (3, 4), au moins une structure de liaison (7) qui relie les points d'articulation (3, 4) entre eux, ainsi qu'au moins un capteur (9), l'au moins un capteur (9) étant agencé sur une section d'une surface (8) de la structure de liaison (7), et le capteur (9) reliant entre eux des points de contact (15, 16) d'au moins deux sections de conduite (13, 14) intégrées dans la structure de liaison (7), **caractérisé en ce que** la structure de liaison (7) présente, dans la zone du capteur (9), au moins un raccord (11) au niveau duquel des points de raccordement (17) des sections de conduite (13, 14) sont accessibles de l'extérieur.

2. Composant de châssis (1) selon la revendication 1, **caractérisé en ce que** l'au moins une structure de liaison (7) est constituée d'un matériau composite fibreux, notamment d'une matière plastique renforcée par des fibres de verre.

3. Composant de châssis (1) selon la revendication 1 ou 2, **caractérisé en ce que** l'au moins un capteur (9) est réalisé sous la forme d'une couche mince piézorésistive (19) agencée sur la section de la surface (8) de la structure de liaison (7), notamment la couche mince piézorésistive (19) est pourvue d'une couche de protection (10) ou est recouverte par le matériau de la structure de liaison (7) ou est enveloppée par ce matériau.

4. Composant de châssis (1) selon l'une quelconque des revendications 1 à 3, **caractérisé en ce que** la couche mince piézorésistive (19) est réalisée sous la forme d'une couche de peinture en un matériau piézorésistif.

5. Composant de châssis (1) selon la revendication 4, **caractérisé en ce que** la couche de peinture est appliquée par coulée ou par pulvérisation.

6. Composant de châssis (1) selon la revendication 4 ou 5, **caractérisé en ce que** la couche de peinture est constituée d'une peinture polymère.

7. Composant de châssis (1) selon l'une quelconque des revendications 1 à 6, **caractérisé en ce que** le capteur (9), notamment une couche mince piézorésistive (19), s'étend dans la direction longitudinale et/ou la direction de tension principale du composant de châssis (1) .

8. Composant de châssis (1) selon l'une quelconque des revendications 1 à 7, **caractérisé en ce que** les sections de conduite (13, 14) sont configurées sous forme de grilles estampées ou de fils.

9. Composant de châssis (1) selon l'une quelconque des revendications 1 à 8, **caractérisé en ce que** le composant de châssis (1) est configuré sous la forme d'un bras (2), d'un support pendulaire, d'un support de roue ou d'un ressort à lame.

10. Suspension de roue pour véhicule automobile, comprenant au moins un composant de châssis (1) selon une ou plusieurs des revendications 1 à 9.

11. Procédé de fabrication d'un composant de châssis (1), le composant de châssis (1) étant fabriqué avec au moins deux points d'articulation (3, 4) et une structure de liaison (7) en une matière plastique ou en au moins un matériau composite fibreux, et le composant de châssis (1) étant pourvu d'au moins un capteur (9), au moins deux sections de conduite (13, 14) étant intégrées dans la structure de liaison (7) dans le processus de fabrication de la structure de liaison (7), et des points de contact (15, 16) des sections de conduite (13, 14) débouchant dans une surface (8) de la structure de liaison (7) et étant reliés entre eux par un capteur (9), **caractérisé en ce qu'**un raccord (11) est formé sur la surface (8) de la structure de liaison (7), des points de raccordement (17) des sections de conduite (13, 14) étant accessibles de l'extérieur au niveau du raccord (11).

12. Procédé selon la revendication 11, **caractérisé en ce que** le capteur (9) est réalisé sous la forme d'une couche mince piézorésistive (19), notamment la couche mince piézorésistive (19) est coulée ou pulvérisée sur une section de la structure de liaison (7).
